(19) Europäisches Patentamt
European Patent Office
Office européen des brevets

(11) **EP 2 907 854 B1**

(12) **EUROPEAN PATENT SPECIFICATION**

(45) Date of publication and mention
of the grant of the patent:
**30.05.2018   Bulletin 2018/22**

(51) Int Cl.:
***C09D 5/34*** *(2006.01)*

(21) Application number: **14155452.7**

(22) Date of filing: **17.02.2014**

(54) **Filler composition for use as repair material**

Füllmaterialzusammensetzung zur Verwendung als Reparaturmaterial

Composition de remplissage pour utilisation en tant que matériau de réparation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2015   Bulletin 2015/34**

(73) Proprietor: **KochiToon Innovations B.V.**
**2582 VJ Den Haag (NL)**

(72) Inventors:
• **Kochibrolashvili, Gurami**
  **2582 VJ den Haag (NL)**

• **Van Loon, Sander**
  **1098 XH Amsterdam (NL)**
• **Renkema, Jaap**
  **6160 AN Geleen (NL)**

(74) Representative: **Renkema, Jaap**
**IPecunia Patents B.V.**
**P.O. Box 593**
**6160 AN Geleen (NL)**

(56) References cited:
**EP-A1- 2 690 075      WO-A2-2007/022983**
**DE-A1- 3 643 634      US-A- 5 017 232**
**US-B2- 7 754 788**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention is directed to a filler composition, and use of a filler composition as repair and finishing composition.

Filler compositions and their uses in construction technology are known in the art. The filler composition according to the invention is developed to be used as a repair and finishing material for substrates like, for example, wood, stone and steel. Filler compositions are used, for example, as an adhesive, a filler or a joint sealer.

An important function of the filler composition is to keep moisture on one side of the construction and thus providing a dry environment on the other side of the construction.

For example a filler composition filling the gap between a window frame and a brick wall around the window is meant to keep rain (moisture) at the outside of the building and to prevent leaking into the building's interior.

Up until recently the filler compositions used in applications such as mentioned above were designed such that the filler composition fulfilled the following three criteria (after application and optionally curing of the filler composition)

a) the filler composition is impermeable for moisture;
b) the filler composition is hydrophobic and
c) the filler composition is more or less flexible;

It is a disadvantage of the filler compositions according to the prior art, that they cause in a substantial amount accumulation of moisture in construction materials such as wood, plaster and limestone within a year. The moisture accumulates precisely along the joints, which are filled with the filler composition, and it may gradually ruin the entire construction. The practice in the Building Construction business of the last 40 years has shown that the main destabilizing factor in a building construction, which is made of traditional, porous and hard building materials, has been obviously overlooked by the developers of the fillers and sealants. This factor is the moisture flow under the influence of the gradient of temperature inside the porous materials, from warm to cold, from inside to outside, the so-called Lykov-effect. This moisture flow cannot be diminished because man and their indoors activities produce considerable amount of moisture and their demands for the indoor climate creates the temperature gradient between the outer environment and the inner environment. E.g. man breathes out approximately 50 g water per m3 per 24 hours per person, and also human activities like cooking, cleaning, taking a bath or shower, doing laundry and the like will cause an increase of moisture levels in the internal environment. Only part of this moisture is removed through convection mechanisms. The reminder of the moisture will accumulate into the walls, ceilings and woodwork and may be driven to outside by the above-mentioned gradient of temperature.

A specific feature of this moisture flow is that when it meets a moisture impermeable barrier, moisture will accumulate near the barrier and will deteriorate the construction, for example by growth of fungi, corrosion of metal parts and the like. Other disadvantages of known filler compositions are shrinking, sagging and crack formation during drying of the filler composition.

It is the object of the invention to provide a filler composition that is moisture permeable and is less or not prone to shrinking, sagging and crack formation.

The invention relates to a filler composition comprising

a) 5-40 weight% of a hydrophilic binder,
b) 5-20 weight% of water,
c) 35-65 weight% of a pumice powder,
d) 0-40 weight% of a filler

wherein the weight percentages are based on the total weight of the filler composition.

Another advantage of the invention is that a substrate does not need to be treated with a primer, since the filler composition is water permeable after drying. This gives considerable saving of raw materials, time and finances in the building construction and maintenance of buildings.

The filler composition according to the present invention comprises between 5 and 40 (wt%), preferably between 5 and 30wt%, more preferably between 10 and 20wt% of a hydrophilic binder based on the total weight of the filler composition. The hydrophilic binder may be a polymeric binder having functional groups that are able to bind to a surface of a substrate, either by physical interaction or chemical reaction. The polymeric binder preferably contains polar groups selected from the group consisting of hydroxyl, ester, carboxylic acid, amide, sulfate, phosphate, sulfosuccinate, urethane and isocyanate. Most preferred are polar groups selected from hydroxyl, carboxylic acid and ester.

The amount of polar groups in the polymeric binder ranges between 5 and 50 wt%, preferably between 10 and 40 wt%, most preferably between 15 and 36 wt%.

This high amounts of polar groups gives the polymeric binder a hydrophilic nature, which supports the transport of moisture through the sealant.

The hydrophilic binder preferably comprises one or more components selected from the group consisting of polyvinyl acetate, polyvinyl alcohol, acrylics, polyvinylchloride, nylon, polyurethanes, polyisocyanate, natural based polymers, carboxylated styrenics, carboxylated butadiene styrene copolymers and carboxylated butadiene rubbers.

In a preferred embodiment of the invention, the polymeric binder is chosen from the group consisting of vinylacetate containing polymers and copolymers (for example copolymers of vinylacetate with acrylic ester, copolymers of vinylacetate with acrylic ester and VeoVA or copolymers of vinylacetate with VeoVA); carboxylated copolymers of butadiene and styrene; carboxylated copolymers of butadiene, styrene and acrylic ester; (co)polymers of acrylic esters.

VeoVa is the vinyl ester of Versatic acid 9 or 10.

Most preferred are polymeric binders comprising copolymers containing at least 20 wt% polyvinyl acetate in filler compositions according to the present invention. Even more preferred are copolymers having 30, 40 or 50 wt% vinylacetate monomer units.

The filler composition according to the invention comprises between 5 and 20 wt.-% water based on the total weight of the filler composition. More preferably the amount of water ranges between 10 and 20 wt%.

The filler composition according to the present invention comprises between 35 and 65 wt%, more preferably between 40 and 60 wt% of pumice powder based on the total weight of the filler composition. Pumice powder is available in a wide variety of grades. Preferably, the pumice powder has a particle size of 50-500 $\mu$m, more preferably of 80-150 $\mu$m. The hardness of the pumice powder is preferably higher than 2 Mohs, more preferably higher than 3 Mohs. The presence of pumice powder gives a filler composition less prone to crack formation, persistent against sagging, has an excellent sandability and shows less shrinkage during drying.

The filler composition according to the present invention may comprise between 0 wt% and 40 wt%, preferably between 10wt% and 35 wt%, more preferably between 15 wt% and 30wt% of a filler. In the context of the present invention the filler does not comprise pumice powder. Generally speaking, the type of filler is not critical for the invention. Preferably, fillers to be used in the filler composition according to the present invention are fillers comprising particles of at least one material selected from the group consisting of talc, calcite, calcium carbonate and kaoline, iron oxides, natural and precipitated barium sulphates, barites, aluminium silicates, aluminium oxides, calcium magnesium carbonates, dolomites, feldspar, nephelinesyenite, calcium silicates, zinc oxide, titanium dioxide, zinc phosphate, graphite, zeolites or other families of sulphates, carbonates, silicates, oxides and vanadates. Also combinations of filler's can be used. The particle size of the filler preferably is 1-20 $\mu$m, more preferably 5-15 $\mu$.

In one embodiment of the invention, the filler comprises calcite. Calcite provides a slightly hydrophobic character to the filler composition in order to avoid that the binder system will be flushed away in contact with water. The presence of the filler in the filler composition furthermore provides a composition after drying which is easy sandable and gives a smooth surface.

Optionally, the filler composition according to the present invention also may comprise between 0.001 and 20 wt% of fibers, preferably between 0.01 and 10 wt% of fibers, more preferably between 0.05 and 5 wt% of fibers. The fibers can be natural or synthetic fibers. Examples of natural fibers are fibers of cotton, flax, hemp, sisal, raffia, jute, coconut, kenaf, bamboo, wool, angora, mohair, alpaca and silk. Examples of synthetic fibers are fibers of cellulose, nylon, polyester, acrylic and polyolefin.

Preferably, the fibers are cellulose fibers. The cellulose fibers can be chosen from natural fibers, like cotton or flax fibers or can be synthetic fibers, like viscose or rayon fibers.

The fibers preferably have a length of 100-300 $\mu$m, more preferably a length of 150-250 $\mu$m.

The presence of the fibers in the filler composition has the advantage that the filler composition shows less shrinkage and/or cracks upon drying of the filler composition.

The filler composition according to the present invention may comprise silica particles with a particle size between 5 and 500 nm.

Preferably the silica particles are present in the form of a silica sol in an amount of between 1 wt% and 10wt%, preferably between 2 wt% and 9wt%, more preferably between 3 wt% and 8wt% based on the total weight of the filler composition. Preferably, the solid content of the silica sol is between 25 wt% and 50 wt%. Silica sol particles are not considered to be a filler in the context of the present invention.

More preferably, the silica sol comprises surface modified colloidal silica. Preferably, the surface modified colloidal silica is an epoxy-silane surface modified colloidal silica. An advantage of the use of such silica sol is that the epoxy silane surface modification provides a stable sol which may be blended more easily with the other components of the filler composition. In the dried filler composition the surface modified silica particles are well and uniformly distributed throughout the entire composition and therefore provide porosity and hardness throughout the entire composition. The reactive surface groups (epoxy) may also provide crosslinking of the polymers present in the composition (e.g. the binder). The presence of silica particles in the filler composition increases the adhesion of the filler composition to a surface, gives the filler composition a higher water resistance after drying and enhances the vapour permeability of the filler composition.

Filler compositions according to the present invention may further comprise additives, for example wetting agents, dispersion agents, flame retardants, stabilizers, colorants, antioxidants, UV-absorbers and/or biocides.

Dispersion agents are compounds that lower the surface tension of a liquid, the interfacial tension between two liquids, or the interfacial tension between a liquid and a solid. In solutions this behavior is known as wetting, and it occurs as a result of dispersion agents adsorbing to the air/water interface. Dispersion agents may act as detergents, wetting agents, emulsifiers, foaming agents, and dispersants. These can for example been chosen from the group of alcohol ethoxylates, amide ethoxylates, amine ethoxylates, arylalkyl phenol ethoxylates, fatty-acid ethoxylates, block polyethers, glycol ethers, polyethyleneglycol (PEG) esters, alkyl ether sulphonates, alkylaryl sulfonates, sulfate esters, sulfonate esters, phosphate esters, alcohol ethoxysulfates, polymers with acidic or salt groups, polymeric dispersing agents, sarcosinates, sulphosuccinates, taurates, lecithins, betaine.

In a preferred embodiment of the invention the filler composition has the following composition

a) 10-20 weight% of a hydrophilic binder;
b) 10-20 weight% of water;
c) 35-65 weight% of a pumice powder;
d) 1-10 weight% of silica particles with a particle size between 5 and 500 μm;
e) 10-30 weight% of a filler;
f) 0.001 -1 weight% of cellulose fibers;
g) 0.1-3 wt% of a dispersant;

wherein the weight percentages are based on the total weight of the filler composition.

In this preferred embodiment, the right balance between the amount of pumice, cellulose, silica sol and filler relative to the amount of binder provides the required porosity in the filler composition to enable moisture transport through the applied filler composition. Moreover this right balance provides a filler composition having limited shrinkage, does not show crack formation upon drying, gives good adhesion to the big variety of the building materials such as wood, concrete, mortar, natural stone, glass, tiles, steel, aluminum, copper and can be easily finished to give a smooth surface.

Being diluted with max 30% water this filler composition can be used as a primer for the above mentioned materials, which gives a considerable acceleration to the working process in the construction.

In a preferred embodiment, the composition has a pigment volume concentration (PVC) between 30% and 80%. The pigment volume concentration is a measure for the amount of a particular pigment or pigments that can be added to a composition comprising a binder, for instance a polymeric binder, the composition being e.g. a coating composition, a filler composition or an adhesive composition. In order to obtain a composition being able to provide protective characteristics such as keeping out moisture, the pigment has to have sufficient "wetting" by the binder. By wetting is meant, that there must be sufficient binder in the composition to completely wet or surround all the pigment (or other filler) particles. There must be enough binder present to completely fill the voids between the pigment particles. The PVC is calculated using equation 1:

$$PVC = 100 * (\Sigma Vpigment / (\Sigma Vpigment + \Sigma Vnon\text{-}volatile\ binder) \qquad \text{equation 1}$$

wherein:

PVC is the pigment volume concentration (%);
$\Sigma$Vpigment is the total pigment (or filler) volume (m3);
$\Sigma$Vnon-volatile binder is the total volume of the non-volatile binder(s) (m3).

Non-volatile binders are binders which do not evaporate upon drying of the filler composition and which are still present in and part of the filler composition after drying of the applied sealant.

The pigment volume concentration (PVC) of the filler composition according to the present invention may be between 30% and 80%, preferably between 35% and 75%, more preferably between 40% and 70 %.

Preferably the amount of solids ranges between 50 and 80 wt% relative to the total of the composition.

The invention also relates to the use of the filler composition according to the invention for repair and finishing of constructions.

Examples

A number of examples have been performed to illustrate the present invention.
The following chemicals have been used to prepare filler compositions:

Materials

Bindzil® CC30, epoxy-silane surface modified colloidal silica's of Akzo Nobel with a total solids content of 30 wt% and 40 wt% respectively;

K2030 Koestrosol: colloidal silica sol, non surface treated

Emultex VV530, a polyvinylacetate hydrophilic binder of Synthomer Ltd, having a total solids content of between 51.5 wt% and 53.5 wt% and a water (hydrophilic solvent) content of between 46.5 wt% and 48.5 wt% ;

Cellulose fibers: Arbocel® BWW 40, fibres of 200 micron, http://www.kremer-pigmente.com/en/fllers-und-building-materials/arbocel-bww-40-59770.html Pumice powder: Pumice Powder 6/0, very fine, particles < 90 micron, volcanic rock from USA, http://www.kremer-pigmente.com/en/fillers-und-building-materials/pumice-powder-6/0--very-fine-599907.html Slatepowder: from Polyfibres UK, fine, http://www.polyfibre.co.uk/index.php?sec=prod&prod=196 , chemical composition probably comparable with that of John Burn, UK slate powder Blue - quartz, mica, chlorite with lesser amounts of muscovite, illite, and traces of feldspar and talc Calcite: Calcium carbonate, natural CaCO3, white, average particle size is about 20 μ http://www.kremer-pigmente.com/en/fillers-und-building-materials/calcite-58720.html BYK: BYK190

General method of preparing filler composiitons.

The filler compositions have been prepared by a process comprising the steps of

a) add a calculated amount of Emultex VV530 to a container;
b) Add silica (like for example Bindzil or Koestrosol);
c) Add the dispersant, like eg BYK190;
d) Stir the mixture with a blade stirrer at ca 500 rpm (for about 3 minutes);
e) Add cellulose fibres followed with stirring for 3 minutes;
f) Add the pumice powder in small portions under stirring, alternating it with the slate powder and calcite.

The filler compositions have been applied on a pine wood substrate and performance has been visually determined. Holes (2 cm diameter and approximately 1-2 cm deep) have been drilled in the pine wood substrate, which have been filled with the filler composition.

The ease of application indicates how easily the filler material can be used to fill the holes, while having the right adhesion to the tools to apply the filler.

The adhesion to substrate indicates how well the filler gives initial adhesion to the pine wood.

Sagging is an indication for the stability of the filler against sagging. For this test, the pine wood testpiece is kept in a vertical plane, with the holes in a horizontal plane, in order to allow the filler to flow out of the holes. In the ideal case, the filler composition does not flow out of the holes.

Shrinkage is visually determined upon drying of the filler composition. In the ideal case no shrinkage of the filler is observed.

Crack formation may occur during drying of the filler composition. In the ideal case, no crack formation is observed.

Sanding indicates the ease to sand and finish the wood panel having filled holes, in order to prepare the panel for painting and finishing. In the ideal case sanding is easy to obtain a perfect test piece.

Three comparative examples have been prepared and 6 examples according to the present invention. The compositions and test results are shown in table 1 below.

|  | CE1 | CE2 | CE3 | ex1 | ex2 | ex3 | ex4 | ex5 | ex6 |
|---|---|---|---|---|---|---|---|---|---|
|  | wt% | wt% | wt% | wt% | wt% | wt% | wt% | wt% | wt% |
| Emultex (EM) | 66,67% | 34,01% | 40,00% | 34,19% | 30,03% | 35,34% | 33,22% | 26,29% | 26,10% |
| Bindzil cc401 |  | 2,72% | 2,40% | 2,56% | 2,70% | 3,18% | 2,99% | 3,15% | 3,10% |
| K2040 koestrosol | 3,33% |  |  |  |  |  |  |  |  |
| Cellulose 200 micron fibres | 6,67% |  | 2,40% |  |  | 4,24% | 1,99% | 0,13% | 0,13% |
| slatepowder | 23,33% | 63,27% | 55,20% |  | 18,62% | 18,37% |  |  |  |
| pumice powder |  |  |  | 63,25% | 48,65% | 38,87% | 48,84% | 46,52% | 56,37% |
| Calciet |  |  |  |  |  |  | 12,96% | 23,65% | 13,00% |
| BYK |  |  |  |  |  |  |  | 0,26% | 1,30% |
| totaal vulstofgehalte | 30,00% | 63,27% | 57,60% | 63,25% | 67,27% | 61,48% | 63,79% | 70,30% | 69,50% |
|  |  |  |  |  |  |  |  |  |  |
| ease of application to substrate | 3 | 3 | 2 | 2 | 3 | 3 | 4 | 5 | 5 |
| adhesion to substrate | 4 | 3 | 3 | 2 | 3 | 3 | 4 | 5 | 5 |
| sagging | 2 | 3 | 3 | 5 | 4 | 5 | 5 | 4 | 5 |
| shrinkage | 1 | 3 | 2 | 3 | 4 | 4 | 4 | 5 | 5 |
| crack formation | 2 | 2 | 2 | 4 | 2 | 4 | 4 | 5 | 4 |
| sanding | 2 | 5 | 2 | 4 | 5 | 2 | 2 | 5 | 5 |
|  |  |  |  |  |  |  |  |  |  |
| visual test results |  |  |  |  |  |  |  |  |  |
| 1 = lowest performance |  |  |  |  |  |  |  |  |  |
| 5 = highest performance |  |  |  |  |  |  |  |  |  |

Comparative examples CE1-CE3 show that especially the sagging of the filler compositions has a low score. All examples contain pumice powder, which prevents sagging, and also has a positive effect on shrinkage and crack formation.

Addition of cellulose fibers further improves shrinkage performance and crack formation, but gives a problem with the sanding: too much cellulose may adversely effect sanding properties. Addition of calcite however, improves the sanding properties of the filler composition. The addition of silica sol can improve the adhesion and moisture transport properties of the dried filler compositions.

All examples according to the invention show vapour permeability when the samples are being dried.

**Claims**

1.  A filler composition comprising

    a. 5-40 weight% of a hydrophilic binder,
    b. 5-20 weight% of water,
    c. 35-65 weight% of a pumice powder,
    d. 0-40 weight% of a filler,

    wherein the weight percentages are based on the total weight of the filler composition.

2.  Filler composition according to claim 1, wherein the hydrophilic binder comprises one or more components selected from the group consisting of polyvinyl acetate, polyvinyl alcohol, acrylics, polyvinylchloride, nylon, polyurethanes, polyisocyanate, natural based polymers, carboxylated styrenics, carboxylated butadiene styrene copolymers and carboxylated butadiene rubbers.

3.  Filler composition according to any one of claims 1-2, wherein the particle size of the pumice powder is 50-500 $\mu$m, preferably 80-150 $\mu$m.

4.  Filler composition according to anyone of claims 1-3, wherein the filler contains between 10 and 35 wt% of filler.

5.  Filler composition according to any one of claims 1-4, wherein the filler comprises particles of at least one material selected from the group consisting of talc, calcite, calcium carbonate and kaoline, iron oxides, natural and precipitated barium sulphates, barites, aluminium silicates, aluminium oxides, calcium magnesium carbonates, dolomites, feldspar, nephelinesyenite, calcium silicates, zinc oxide, zinc phosphate, graphite, zeolites or other families of sulphates, carbonates, silicates, oxides and vanadates.

6.  Filler composition according to any one of claims 1-5, wherein the particle size of the filler is 1-20 $\mu$m.

7.  Filler composition according to any one of claims 1-6, wherein the resin composition also comprises 0.001-20 weight% of cellulose fibers, preferably 0.05-1 wt% of cellulose fibers.

8.  Filler composition according to claim 7, wherein the fibers have a length of 100-300 $\mu$m.

9.  Filler composition according to anyone of claims 1-8, wherein the composition comprises 1-10 weight% of silica particles with a particle size between 5 and 500 nm

10.  Filler composition according to claim 9, wherein the silica particles are surface modified.

11.  Filler composition according to any of the preceding claims, wherein the composition comprises between 0,1-5 wt% of a dispersant.

12.  Filler composition according to claim 1, comprising

    a. 10-20 weight% of a hydrophilic binder;
    b. 10-20 weight% of water;
    c. 35-65 weight% of a pumice powder;
    d. 1-10 weight% of silica particles with a particle size between 5 and 500 $\mu$m;

e. 10-30 weight% of a filler;

f. 0.001-1 weight% of cellulose fibers;

g. 0.1-3 wt% of a dispersant;

wherein the weight percentages are based on the total weight of the filler composition.

**13.** Use of the filler composition according to anyone of claims 1-12.

**Patentansprüche**

**1.** Füllstoffzusammensetzung, umfassend:

a. 5 bis 40 Gewichts-% eines hydrophilen Bindemittels,

b. 5 bis 20 Gewichts-% Wasser,

c. 35 bis 65 Gewichts-% eines Bimssteinpulvers,

d. 0 bis 40 Gewichts-% eines Füllstoffs,

wobei die Gewichtsprozentanteile auf dem Gesamtgewicht der Füllstoffzusammensetzung basieren.

**2.** Füllstoffzusammensetzung nach Anspruch 1, wobei das hydrophile Bindemittel einen oder mehrere Bestandteile, ausgewählt aus der Gruppe, bestehend aus Polyvinylacetat, Polyvinylalkohol, Acrylen, Polyvinylchlorid, Nylon, Polyurethanen, Polyisocyanat, Polymeren auf natürlicher Basis, carboxylierten Styrolen, carboxylierten Butadien-Styrol-Copolymeren und carboxylierten Butadienkautschuken, umfasst.

**3.** Füllstoffzusammensetzung nach einem der Ansprüche 1 bis 2, wobei die Teilchengröße des Bimssteinpulvers 50 bis 500 $\mu$m, bevorzugt 80 bis 150 $\mu$m, beträgt.

**4.** Füllstoffzusammensetzung nach einem der Ansprüche 1 bis 3, wobei der Füllstoff zwischen 10 und 35 Gew.-% Füllstoff enthält.

**5.** Füllstoffzusammensetzung nach einem der Ansprüche 1 bis 4, wobei der Füllstoff Teilchen mindestens eines Materials, ausgewählt aus der Gruppe, bestehend aus Talkum, Calcit, Calciumcarbonat und Kaolin, Eisenoxiden, natürlichen und gefällten Bariumsulfaten, Baryten, Aluminiumsilicaten, Aluminiumoxiden, Calciummagnesiumcarbonaten, Dolomiten, Feldspat, Nephelinsyenit, Calciumsilicaten, Zinkoxid, Zinkphosphat, Graphit, Zeolithen oder anderen Familien von Sulfaten, Carbonaten, Silicaten, Oxiden und Vanadaten, umfasst.

**6.** Füllstoffzusammensetzung nach einem der Ansprüche 1 bis 5, wobei die Teilchengröße des Füllstoffs 1 bis 20 $\mu$m beträgt.

**7.** Füllstoffzusammensetzung nach einem der Ansprüche 1 bis 6, wobei die Harzzusammensetzung auch 0,001 bis 20 Gewichts-% Cellulosefasern, bevorzugt 0,05 bis 1 Gew.-% Cellulosefasern, umfasst.

**8.** Füllstoffzusammensetzung nach Anspruch 7, wobei die Fasern eine Länge von 100 bis 300 $\mu$m aufweisen.

**9.** Füllstoffzusammensetzung nach einem der Ansprüche 1 bis 8, wobei die Zusammensetzung 1 bis 10 Gewichts-% Siliciumdioxid-Teilchen mit einer Teilchengröße zwischen 5 und 500 nm umfasst.

**10.** Füllstoffzusammensetzung nach Anspruch 9, wobei die Siliciumdioxid-Teilchen oberflächenmodifiziert sind.

**11.** Füllstoffzusammensetzung nach einem der vorhergehenden Ansprüche, wobei die Zusammensetzung zwischen 0,1 und 5 Gew.-% eines Dispergiermittels umfasst.

**12.** Füllstoffzusammensetzung nach Anspruch 1, umfassend:

a. 10 bis 20 Gewichts-% eines hydrophilen Bindemittels;

b. 10 bis 20 Gewichts-% Wasser;

c. 35 bis 65 Gewichts-% eines Bimssteinpulvers;

d. 1 bis 10 Gewichts-% Siliciumdioxid-Teilchen mit einer Teilchengröße zwischen 5 und 500 μm;
e. 10 bis 30 Gewichts-% eines Füllstoffs;
f. 0,001 bis 1 Gewichts-% Cellulosefasern;
g. 0,1 bis 3 Gew.-% eines Dispergiermittels;

wobei die Gewichtsprozentanteile auf dem Gesamtgewicht der Füllstoffzusammensetzung basieren.

13. Benutzung der Füllstoffzusammensetzung nach einem der Ansprüche 1 bis 12.


**Revendications**

1. Composition de charge comprenant

    a. de 5 à 40 % en poids d'un liant hydrophile,
    b. de 5 à 20 % en poids d'eau,
    c. de 35 à 65 % en poids d'une poudre de pierre ponce,
    d. de 0 à 40 % en poids d'une charge,

dans laquelle les pourcentages en poids sont basés sur le poids total de la composition de charge.

2. Composition de charge selon la revendication 1, dans laquelle le liant hydrophile comprend un ou plusieurs composants sélectionnés dans le groupe constitué par l'acétate de polyvinyle, l'alcool polyvinylique, les composés acryliques, le polychlorure de vinyle, le nylon, les polyuréthanes, le polyisocyanate, les polymères à base naturelle, les composés styréniques carboxylés, les copolymères de butadiène styrène carboxylés et les caoutchoucs de butadiène carboxylés.

3. Composition de charge selon l'une quelconque des revendications 1 à 2, dans laquelle la taille de particule de la poudre de pierre ponce est de 50 à 500 μm, de préférence de 80 à 150 μm.

4. Composition de charge selon l'une quelconque des revendications 1 à 3, dans laquelle la charge contient entre 10 et 35 % en poids de charge.

5. Composition de charge selon l'une quelconque des revendications 1 à 4, dans laquelle la charge comprend des particules d'au moins un matériau sélectionné dans le groupe constitué par le talc, la calcite, le carbonate de calcium et le kaolin, les oxydes de fer, les sulfates de baryum naturels et précipités, les barytes, les silicates d'aluminium, les oxydes d'aluminium, les carbonates de calcium magnésium, les dolomies, le feldspath, la néphélinesyénite, les silicates de calcium, l'oxyde de zinc, le phosphate de zinc, le graphite, les zéolites ou d'autres familles de sulfates, carbonates, silicates, oxydes et vanadates.

6. Composition de charge selon l'une quelconque des revendications 1 à 5, dans laquelle la taille de particule de la charge est de 1 à 20 μm.

7. Composition de charge selon l'une quelconque des revendications 1 à 6, dans laquelle la composition de résine comprend également de 0,001 à 20 % en poids de fibres de cellulose, de préférence de 0,05 à 1 % en poids de fibres de cellulose.

8. Composition de charge selon la revendication 7, dans laquelle les fibres ont une longueur de 100 à 300 μm.

9. Composition de charge selon l'une quelconque des revendications 1 à 8, dans laquelle la composition comprend de 1 à 10 % en poids de particules de silice ayant une taille de particule comprise entre 5 et 500 nm.

10. Composition de charge selon la revendication 9, dans laquelle les particules de silice sont modifiées en surface.

11. Composition de charge selon l'une quelconque des revendications précédentes, dans laquelle la composition comprend entre 0,1 et 5 % en poids d'un dispersant.

12. Composition de charge selon la revendication 1, comprenant

a. de 10 à 20 % en poids d'un liant hydrophile ;
b. de 10 à 20 % en poids d'eau ;
c. de 35 à 65 % en poids d'une poudre de pierre ponce ;
d. de 1 à 10 % en poids de particules de silice ayant une taille de particule comprise entre 5 et 500 $\mu$m ;
e. de 10 à 30 % en poids d'une charge ;
f. de 0,001 à 1 % en poids de fibres de cellulose ;
g. de 0,1 à 3 % en poids d'un dispersant ;

dans laquelle les pourcentages en poids sont basés sur le poids total de la composition de charge.

13. Utilisation de la composition de charge selon l'une quelconque des revendications 1 à 12.